# EUROPEAN PATENT SPECIFICATION

(11) **EP 3 823 337 B1**
(45) Date of publication and mention of the grant of the patent: **21.02.2024**
(21) Application number: 18926099.5
(22) Date of filing: 13.07.2018
(51) Int. Cl.: H04W 16/28, H04W 72/04

(54) **USER EQUIPMENT AND BASE STATION**
BENUTZERGERÄT UND BASISSTATION
ÉQUIPEMENT UTILISATEUR ET STATION DE BASE

(43) Date of publication of application: 19.05.2021
(73) Proprietor: NTT DoCoMo, Inc., Tokyo 100-6150 (JP)
(72) Inventor: MATSUMURA, Yuki, Tokyo 100-6150 (JP); KAKISHIMA, Yuichi, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/026609
(87) International publication number: WO 2020/012662

(56) References cited:
- US-A1- 2018 102 827
- NTT DOCOMO ET AL: "PUSCH time-domain resource allocation", 3GPP DRAFT; R1-1805056, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 7 April 2018 (2018-04-07), XP051414364, Retrieved from the Internet: URL:http://www.3gpp.org/ftp/tsg%5Fran/WG1% 5FRL1/TSGR1%5F92b/Docs/ [retrieved on 2018-04-07]
- CMCC: "RACH in Gradual UE-Specific (GUS) initial access", 3GPP DRAFT; R1-1612182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161110 - 20161114 13 November 2016 (2016-11-13), XP051176134, Retrieved from the Internet: URL:http://www.3gpp.org/ftp/Meetings_3GPP_ SYNC/RAN1/Docs/ [retrieved on 2016-11-13]
- InterDigital Inc: "On Beam Indication for PDCCH and PDSCH", 3GPP TSG RAN WG1#90 R1- 1714141, 20 August 2017 (2017-08-20), XP051316930, Retrieved from the Internet: URL:http://www.3gpp.org/ftp/tsg_ran/WG1RL1 /TSGR1_90/Docs/R1-1714141.zip [retrieved on 2018-09-06]
- ASUSTeK: "Remaining issues on beam management", 3GPP TSG RAN WG1#92bis R1-1804035, 3 April 2018 (2018-04-03), XP051412835, Retrieved from the Internet: URL:http://www.3gpp.org/ftp/tsg_ran/WG1_RL 1/TSGRl_92b/Docs/R1-1804035.zip [retrieved on 2018-09-06]
- SAMSUNG: "Multi-beam Transmission for NR-PDCCH", 3GPP TSG RAN WG1#89 R1-1707987, 6 May 2017 (2017-05-06), XP051262164, Retrieved from the Internet: URL:http://www.3gpp.org/ftp/tsg_ran/WG1_RL 1/TSGR1_89/Docs/R1-1707987.zip [retrieved on 2018-09-06]

## Description

### Technical Field

The present disclosure relates to a user terminal and a base station of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.
Non-Patent Literature 2 describes PUSCH time-domain resource allocation. It is mentioned that, from gNB point of view, for downlink transmission and uplink reception, same beam is in general preferable.
Non-Patent Literature 3 describes RACH in Gradual UE-Specific (GUS) initial access. It is mentioned that, with channel reciprocity, the transmission beam at gNB or UE can be obtained from the reception beam and vice versa.
Patent Literature 1 describes channel reciprocity which refers to property that an uplink channel and a downlink channel have similar characteristics.

### Citation List

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010
Non-Patent Literature 2: NTT DOCOMO INC: "PUSCH time-domain resource allocation", 3GPP DRAFT; R1-1805056;
Non-Patent Literature 3: CMCC: "RACH in Gradual UE-Specific (GUS) initial access", 3GPP DRAFT; R1-1612182; and
Patent Literature 1: US 2018/102827 A1.

### Summary of Invention

### Technical Problem

It is studied for a future radio communication system (also described simply as NR below) to control channel transmission/reception processing based on a Transmission Configuration Indicator (TCI) state.

However, a TCI state control method that has been studied so far regarding Rel-15 NR requires a relatively long time to change the TCI state, or requires a communication overhead. Hence, there is a risk that a communication throughput lowers in a case where the TCI state needs to be frequently changed.

It is therefore one of objects of the present disclosure to provide a user terminal and a base station that can switch a TCI state or a beam of a channel at a high speed.

### Solution to Problem

A terminal according to claim 1 is provided. A base station according to claim 2 is provided: A method according to claim 3 is provided. A system according to claim 4 is provided.

### Advantageous Effects of Invention

According to one aspect of the present disclosure, it is possible to switch a TCI state or a beam of a channel at a high speed.

### Brief Description of Drawings

Fig. 1 is a diagram illustrating one example of PDCCH beam management according to Rel-15 NR.
Fig. 2 is a diagram illustrating one example of low latency beam selection.
Fig. 3 is a diagram illustrating one example of PDCCH beam management in a case where low latency beam selection is configured.
Fig. 4 is a diagram illustrating one example of a PUCCH or PUSCH resource for reporting a CSI measurement result.
Fig. 5 is a diagram illustrating one example of PDSCH beam management in a case where low latency beam selection is configured.
Fig. 6 is a diagram illustrating one example of PUCCH beam management in a case where low latency beam selection is configured.
Fig. 7 is a diagram illustrating another example of PUCCH beam management in a case where low latency beam selection is configured.
Fig. 8 is a diagram illustrating one example of an assumption of a base station transmission beam of a PDCCH based on T_{offset}.
Fig. 9 is a diagram illustrating another example of the assumption of the base station transmission beam of the PDCCH based on T_{offset}.
Fig. 10 is a diagram illustrating still another example of the assumption of the base station transmission beam of the PDCCH based on T_{offset}.
Fig. 11 is a diagram illustrating one example of a schematic configuration of a radio communication system according to one embodiment.
Fig. 12 is a diagram illustrating one example of an overall configuration of the base station according to the one embodiment.
Fig. 13 is a diagram illustrating one example of a function configuration of the base station according to the one embodiment.
Fig. 14 is a diagram illustrating one example of an overall configuration of a user terminal according to the one embodiment.
Fig. 15 is a diagram illustrating one example of a function configuration of the user terminal according to the one embodiment.
Fig. 16 is a diagram illustrating one example of hardware configurations of the base station and the use terminal according to the one embodiment.

### Description of Embodiments

### (CORESET)

According to NR, a COntrol REsource SET (CORESET) is used to transmit a physical layer control signal (e.g., Downlink Control Information (DCI)) from a base station to a user terminal (UE: User Equipment).

The CORESET is a control channel (e.g., Physical Downlink Control Channel (PDCCH)) allocation candidate domain. The CORESET may be configured to include a given frequency domain and time domain resource (e.g., 1 or 2 OFDM symbols).

The UE may receive CORESET configuration information (that may be referred to as a CORESET configuration or coreset-Config) from the base station. The UE can detect the physical layer control signal by monitoring the CORESET configured to the own user terminal.

The CORESET configuration may be notified by, for example, a higher layer signaling, or may be indicated by a given RRC information element (that may be referred to as "ControlResourceSet").

In this regard, the higher layer signaling may be one of or a combination of, for example, a Radio Resource Control (RRC) signaling, a Medium Access Control (MAC) signaling and broadcast information.

The MAC signaling may use, for example, an MAC Control Element (MAC CE) or an MAC Protocol Data Unit (PDU). The broadcast information may be, for example, a Master Information Block (MIB), a System Information Block (SIB) or Remaining Minimum System Information (RMSI).

A given number of (e.g., three or less) CORESETs may be configured per Bandwidth Part (BWP) configured to the UE in a serving cell.

In this regard, the BWP is a partial band configured in a carrier (that is also referred to as a cell, a serving cell or a Component Carrier (CC)), and is also referred to as a partial band. The BWP may include a BWP for Uplink (UL) (a UL BWP or an uplink BWP) and a BWP for Downlink (DL) (a DL BWP or a downlink BWP). Each BWP to which the above given number of CORESETs are given may be a DL BWP.

The CORESET configuration may mainly include information of a resource related configuration and an RS related configuration of a PDCCH. Following parameters of a CORESET #p (e.g., 0 ≤ p < 3) configured to each DL BWP may be given to the UE by a higher layer signaling (CORESET configuration). That is, the following parameters may be notified (configured) to the UE per CORESET.
- A CORESET Identifier (CORESET-ID (Identifier)),
- A scramble ID of a DeModulation Reference Signal (DMRS) for a PDCCH,
- A CORESET time duration (e.g., a time duration or CORESET-time-duration) indicated by the number of consecutive symbols,
- Frequency-domain resource allocation (e.g., information (CORESET-freq-dom) that indicates a given number of resource blocks that make up a CORESET),
- A mapping type (information that indicates interleaving or non-interleaving) (e.g., CORESET-CCE-to-REG-mapping-type) from a Control Channel Element (CCE) in the CORESET to a Resource Element Group (REG),
- Information (e.g., CORESET-REG-bundle-size) that indicates a size (the number of REGs in an REG bundle) of a group (REG bundle) including a given number of REGs,
- Information (e.g., CORESET-shift-index) that indicates a Cyclic Shift (a CS, a CS amount or a CS index) for an interleaver of the REG bundle,
- A Transmission Configuration Indicator (TCI) state for a PDCCH (that is also referred to as QCL information (antenna port QCL) of an antenna port of a DMRS for PDCCH reception), and
- An indication (e.g., TCI-PresentInDCI) regarding whether or not there is a TCI field in DCI (e.g., a DCI format 1_0 or a DCI format 1_1) transmitted on the PDCCH in the CORESET #p.

In addition, a "CORESET-ID #0" may indicate a CORESET (that may be referred to as an initial CORESET or a default CORESET) configured by using an MIB.

A search domain and a search method of PDCCH candidates are defined as a Search Space (SS). The UE may receive search space configuration information (that may be referred to as a search space configuration) from the base station. The search space configuration may be notified by, for example, a higher layer signaling (such as an RRC signaling).

The UE monitors the CORESET based on the search space configuration. The UE can decide an association between the CORESET and the search space based on the CORESET-ID included in the above search space configuration. One CORESET may be associated with one or a plurality of search spaces.

### (QCL/TCI)

It is studied for NR that, based on information (Quasi-Co-Location (QCL) information) related to QCL of a channel (e.g., a PDCCH, a PDSCH or a PUCCH), the UE controls reception processing (e.g., demapping, demodulation, decoding or reception beam formation) and transmission processing (e.g., mapping, modulation, encoding, precoding and transmission beam formation) of the channel.

In this regard, the QCL is an index that indicates a statistical property of a channel. When, for example, a certain signal/channel and another signal/channel have a QCL relationship, the QCL relationship may mean that it is possible to assume that at least one of a doppler shift, a doppler spread, an average delay, a delay spread and a spatial parameter (e.g., spatial reception parameter (spatial Rx parameter)) is identical (the QCL holds for at least one of these parameters) between a plurality of these different signals/channels.

In addition, the spatial reception parameter may be associated with a reception beam (e.g., reception analog beam) of the UE, and a beam may be specified based on spatial QCL. The QCL (or at least one element of the QCL) in the present disclosure may be read as spatial QCL (sQCL).

A plurality of types of QCL (QCL types) may be specified. For example, four QCL types A to D whose parameters (or parameter sets) that can be assumed identical are different may be provided, and the parameters are as follows:
- QCL type A: doppler shift, doppler spread, average delay and delay spread,
- QCL type B: doppler shift and doppler spread,
- QCL type C: average delay and doppler shift, and
- QCL type D: spatial reception parameter.

The TCI state (TCI-state) may indicate (may include) QCL information. The TCI state (and/or QCL information) may be, for example, information related to QCL of a target channel (or a Reference Signal (RS) for the target channel) and another signal (e.g., another Downlink Reference Signal (DL-RS)), and may include at least one of, for example, information (DL-RS related information) that relates to a DL-RS to have the QCL relationship with, and information (QCL type information) that indicates the above QCL type.

The DL-RS related information may include at least one of information that indicates a DL-RS to have the QCL relationship with, and information that indicates a resource of the DL-RS. When, for example, a plurality of Reference Signal sets (RS sets) are configured to the UE, the DL-RS related information may indicate at least one of a DL-RS that has the QCL relationship with a channel (or a port of the channel) among RSs included in the RS sets, and a resource for the DL-RS.

In this regard, at least one of an RS and a DL-RS for a channel may be at least one of a Synchronization Signal (SS), a broadcast channel (PBCH: Physical Broadcast Channel), a Synchronization Signal Block (SSB), a Mobility Reference Signal (MRS: Mobility RS), a Channel State Information-Reference Signal (CSI-RS), a DeModulation Reference Signal (DMRS) and a beam-specific signal, or a signal that is configured by expanding or changing these signals (e.g., a signal that is configured by changing at least one of a density and a periodicity).

The synchronization signal may be at least one of, for example, a Primary Synchronization Signal (PSS: Primary SS) and a Secondary Synchronization Signal (SSS: Secondary SS). The SSB may be a signal block that includes a synchronization signal and a broadcast channel, and may be referred to as an SS/PBCH block.

Information related to QCL of a PDCCH (or a DMRS antenna port related to the PDCCH) and a given DL-RS may be referred to as a TCI state for the PDCCH.

The UE may decide a TCI state for a UE-specific PDCCH (CORESET) based on an RRC signaling and an MAC CE.

For example, one or a plurality of (K) TCI states may be configured per CORESET to the UE by a higher layer signaling (ControlResourceSet information element). Furthermore, the UE may activate each of one or a plurality of TCI states for each CORESET by using the MAC CE. The MAC CE may be referred to as a TCI State Indication for a UE-specific PDCCH MAC CE. The UE may monitor the CORESET based on an active TCI state associated with the CORESET.

The TCI may be associated with a beam. For example, the UE may assume that PDCCHs of different TCI states are transmitted by using different beams.

Information related to QCL of a PDSCH (or a DMRS antenna port related to the PDSCH) and a given DL-RS may be referred to as a TCI for the PDSCH.

M (M ≥ 1) TCI states for PDSCHs (QCL information of the M PDSCHs) may be notified (configured) to The UE by a higher layer signaling. In addition, the number of TCI states M configured to the UE may be limited according to at least one of UE capability and a QCL type.

DCI used to schedule a PDSCH may include a given field (that may be referred to as, for example, a field for a TCI, a TCI field or a TCI state field) that indicates a TCI state (QCL information for the PDSCH). The DCI may be used to schedule a PDSCH of one cell, and may be referred to as, for example, DL DCI, a DL assignment, a DCI format 1_0 and a DCI format 1_1.

Furthermore, when DCI includes a TCI field of x bits (e.g., x = 3), the base station may configure TCI states of 2^{x} (e.g., 8 in a case of x = 3) at maximum to the UE in advance by using a higher layer signaling. A value of a TCI field (TCI field value) in DCI may indicate one of TCI states configured in advance by the higher layer signaling.

When TCI states of more than 8 types are configured to the UE, the TCI states of 8 types or less may be activated (or indicated) by using an MAC CE. The MAC CE may be referred to as TCI States Activation/Deactivation for a UE-specific PDSCH MAC CE. The value of the TCI field in the DCI may indicate one of TCI states activated by the MAC CE.

The UE may determine QCL of a PDSCH (or a DMRS port of the PDSCH) based on the TCI state indicated by the TCI field value in the DCI. For example, assuming that a DMRS port (or a DMRS port group) of a PDSCH of the serving cell is in QCL with a DL-RS associated with the TCI state notified by the DCI, the UE may control reception processing (e.g., decoding or demodulation) of the PDSCH.

### (Beam Management)

By the way, a Beam Management (BM) method has been studied for Rel-15 NR so far. It is studied for the beam management to select a beam based on L1-RSRP reported by the UE. Changing (switching) a beam of a certain signal/channel corresponds to changing a TCI state (QCL) of the certain signal/channel.

In addition, a beam selected by beam selection may be a transmission beam (Tx beam), or may be a reception beam (Rx beam). Furthermore, the beam selected by beam selection may be a beam of the UE, or may be a beam of the base station.

The UE may include the L1-RSRP in CSI to report by using an uplink control channel (PUCCH: Physical Uplink Control Channel) or an uplink shared channel (PUSCH: Physical Uplink Shared Channel).

In this regard, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI) and L1-RSRP.

A measurement result (e.g., CSI) reported for beam management may be referred to as beam measurement, a beam measurement result or a beam measurement report.

The UE may measure a channel state by using a CSI measurement resource, and derive the L1-RSRP. The CSI measurement resource may be at least one of, for example, an SS/PBCH block resource, a CSI-RS resource and other reference signal resources. CSI measurement report configuration information may be configured to the UE by using a higher layer signaling.

The CSI measurement report configuration information (CSI-MeasConfig or CSI-ResourceConfig) may include information such as one or more Non Zero Power (NZP) CSI-RS resource sets (NZP-CSI-RS-ResourceSet) for CSI measurement, one or more Zero Power (ZP) CSI-RS resource sets (ZP-CSI-RS-ResourceSet) (or a CSI-Interference Management (IM) resource sets (CSI-IM-ResourceSet)) and one or more SS/PBCH block resource sets (CSI-SSB-ResourceSet).

Information of each resource set may include information related to repetition in a resource of each resource set. The information related to repetition may indicate, for example, "on" or "off'. In this regard, "on" may be expressed as "enabled or valid", and "off" may be expressed as "disabled or invalid".

For example, the UE may assume for a resource set for which repetition has been configured to "on" that a resource in the resource set has been transmitted by using a same downlink spatial domain transmission filter. In this case, the UE may assume that the resource in the resource set has been transmitted by using the same beam (by, for example, using the same beam from the same base station).

Control may be performed such that the UE should not assume (or does not need to assume) for a resource set for which repetition has been configured to "off' that a resource in the resource set has been transmitted by using the same downlink spatial domain transmission filter. In this case, the UE may assume that the resource in the resource set is not transmitted by using the same beam (i.e., the resource has been transmitted by using a different beam). That is, the UE may assume for the resource set for which repetition has been configured to "off" that the base station is performing beam sweeping.

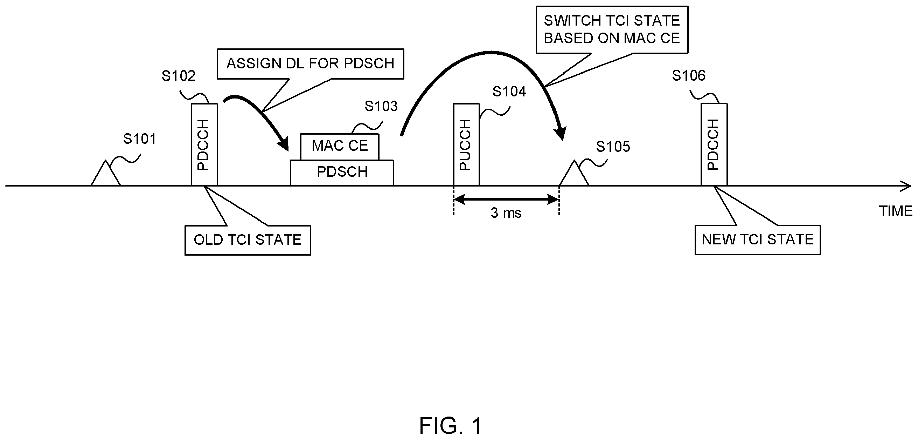

Fig. 1 is a diagram illustrating one example of PDCCH beam management according to Rel-15 NR. A Network (an NW such as the base station) determines to switch a TCI state for a PDCCH of a certain UE. The NW transmits DCI for scheduling a PDSCH to the certain UE by using a PDCCH that conforms to an old (pre-switch) TCI state.

Furthermore, the base station includes a TCI state indication for a UE-specific PDCCH MAC CE in the PDSCH to transmit (step S103).

When detecting the above DCI, the UE decodes the above PDSCH, and obtains the above MAC CE. When receiving the above MAC CE, the UE transmits Hybrid Automatic Repeat reQuest Acknowledgement (HARQ-ACK) for a PDSCH that has provided the MAC CE (step S104). The UE applies an activation command of the TCI state based on the above MAC CE 3 milliseconds after a slot in which the HARQ-ACK is transmitted (step S105).

Subsequently, the base station transmits a PDCCH that conforms to a new (post-switch) TCI state, and the UE can receive and decode the PDCCH (step S106).

As described above, a control method of a TCI state for a PDCCH that has been studied so far regarding Rel-15 NR takes a relatively long time to change the TCI state. Furthermore, in a case of other channels (such as a PDSCH and a PUCCH), too, changing the TCI state takes a relatively long time, or requires a communication overhead. Therefore, in a case where the TCI state needs to be frequently changed, there is a risk that latency caused by the change is a problem, and a communication throughput lowers.

Hence, the inventors of the present invention have conceived a method for switching a TCI state or a beam of a channel at a high speed.

An embodiment according to the present disclosure will be described in detail with reference to the drawings. A radio communication method according to each embodiment may be each applied alone or may be applied in combination.

### (Radio Communication Method)

### <Configuration of Low Latency Beam Selection>

In one embodiment, when low latency beam selection is configured by a higher layer signaling, the UE may assume that a TCI state for a PDCCH is not configured.

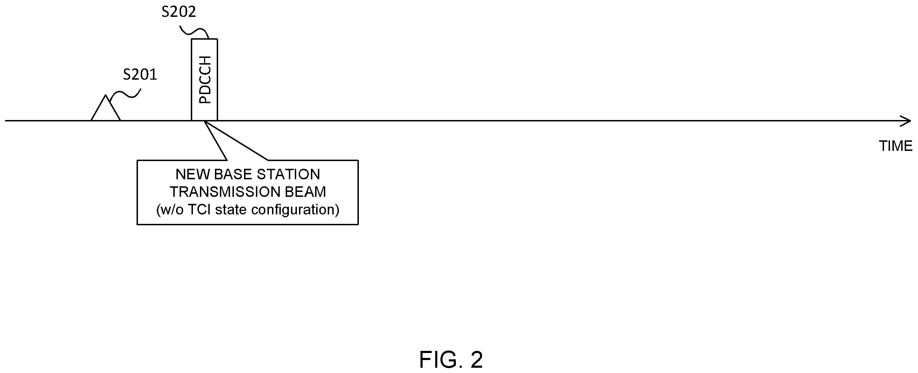

Fig. 2 is a diagram illustrating one example of low latency beam selection falling within the scope of the claimed invention. The NW determines to switch a TCI state for a PDCCH of a certain UE (step S201). After step S201, the NW transmits a PDCCH that conforms to a new (post-switch) TCI state to the certain UE without transmitting a PDCCH (DCI) that conforms to an old TCI state as illustrated in Fig. 1 or transmitting the PDSCH (MAC CE) (step S202).

In addition, low latency beam selection may be referred to as fast beam selection, beam selection w/o a TCI state, a beam selection type II or a TCI state indication type 2.

On the other hand, according to a TCI state indication method that uses RRC+MAC CE as described with reference to Fig. 1, high latency beam selection may be referred to as slow beam selection, beam selection w a TCI state, a beam selection type I, a TCI state indication type 1 and Rel-15 beam selection

When low latency beam selection is not configured, the UE may assume to follow high latency beam selection. In this case, the TCI state is configured to the UE, so that the UE can grasp a transmission beam of the base station.

That is, the UE can switch between low latency beam selection and high latency beam selection by a higher layer signaling.

### <PDCCH Reception Processing>

Even in a case where the TCI state is not configured as illustrated in Fig. 2, the UE may decode a PDCCH by, for example, trying blind-decoding the PDCCH of an assumed TCI state. The UE may perform reception processing (such as demodulation and decoding) on the PDCCH assuming that a specific signal/channel (e.g., at least one of an SS/PBCH block and a CSI-RS to be configured) and a DMRS of the PDCCH are in QCL.

According to the claimed invention, the UE to which low latency beam selection has been configured assumes that a UE reception beam for the PDCCH is the same as a UE reception beam corresponding to a reported latest beam measurement result. The UE to which low latency beam selection has been configured may assume that a base station transmission beam for the PDCCH is the same as a base station transmission beam corresponding to the latest beam measurement result reported by the UE. In other words, the UE to which low latency beam selection has been configured may assume that the TCI state for the PDCCH is the same as a TCI state corresponding to the reported latest beam measurement result (i.e., the TCI state for the PDCCH is in QCL with a signal/channel used for measurement of the reported latest beam measurement result).

Based on this assumption, the UE monitors the PDCCH (CORESET) by using a specific UE reception beam even when the TCI state for the PDCCH is not notified.

In addition, "that low latency beam selection has been configured" in the present disclosure may be read as "that low latency beam selection has been configured and repetition in a resource in a resource set for CSI measurement has been configured to "off‴′ or "that low latency beam selection has been configured and the base station applies transmission beam sweeping to a resource for CSI measurement".

Furthermore, a CORESET in the present disclosure may be read as at least one of a search space, a search space set and a PDCCH candidate.

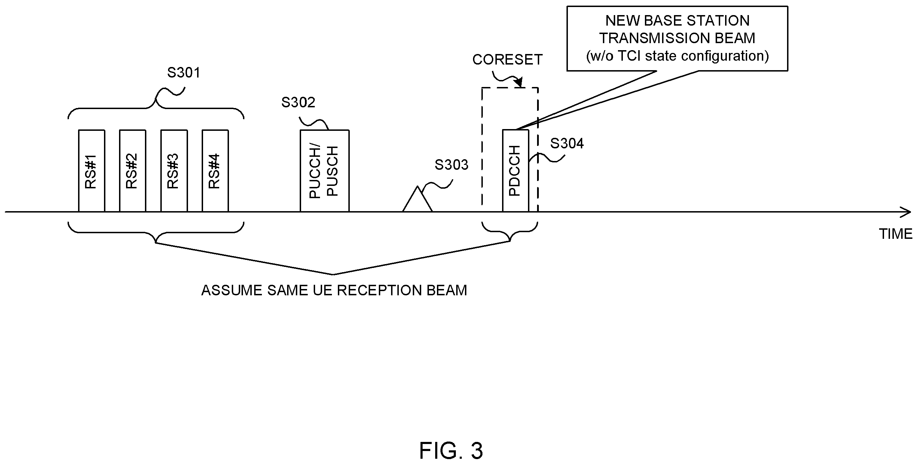

Fig. 3 is a diagram illustrating one example of PDCCH beam management in a case where low latency beam selection is configured. The UE assumes that low latency beam selection is configured and, furthermore, RSs #1 to #4 whose repetition is "off' are configured as reference signals for CSI measurement.

The base station transmits the RSs #1 to #4 to the UE (step S301). The base station may apply transmission beam sweeping to transmission of the RSs. The UE may assume the same UE reception beam (i.e., the UE may use the same UE reception beam to perform reception processing) on the RSs #1 to #4 whose repetition is "off'.

The UE transmits a measurement report (e.g., CSI) based on measurement results of the RSs #1 to #4 by using a PUCCH or a PUSCH (step S302). The UE may transmit the best beam measurement result of, for example, the RSs #1 to #4. The measurement report will be described later

The base station may determine to switch a TCI state for a PDCCH of the UE at an arbitrary timing (step S303). The base station may transmit a PDCCH to be transmitted in an arbitrary CORESET after step S303 by using a new base station transmission beam (TCI state) (step S304).

When receiving the CORESET in step S304, the UE may use the same UE reception beam as a UE reception beam (a UE reception beam used in step S301) corresponding to the latest beam measurement result reported in step S302.

### <Beam Measurement Report>

One example of the measurement report in step S302 will be described. The UE may perform at least one of channel quality measurement and interference measurement based on at least one of a CSI measurement resource and an interference measurement resource, and report (transmit) a measurement result (e.g., CSI) by using a PUCCH or a PUSCH.

The CSI measurement resource and the interference measurement resource may be, for example, SS/PBCH block resources or CSI-RS resources. The base station may select a transmission or reception beam based on a reporting result of the UE. The CSI measurement and the interference measurement are also collectively referred to as CSI measurement below.

CSI measurement/reporting in the present disclosure may be read as at least one of measurement/reporting for beam management, beam measurement/reporting and radio link quality measurement/reporting.

Furthermore, a channel quality measurement result may include, for example, L1-RSRP.

Furthermore, an interference measurement result may include a Signal to Interference plus Noise Ratio (SINR), a Signal to Noise Ratio (SNR), Reference Signal Received Quality (RSRQ) and other indices related to an interference (e.g., arbitrary indices other than L1-RSRP). In addition, the SINR, the SNR and the RSRQ may be referred to as, for example, an L1-SINR, an L1-SNR and L1-RSRQ, respectively.

When reporting at least one of the L1-RSRP, the L1-RSRQ, the L1-SINR and the channel quality measurement result, the UE may report a value whose given number is the largest (a value that is a given number from a largest value). When reporting at least one of interference measurement results, the UE may report a value whose given number is the smallest (a value that is a given number from a smallest value). In addition, when UCI includes a plurality of values, the UCI may include one value, and differences between the one value and other values.

The UE may be notified of information related to the given number by using a higher layer signaling, a physical layer signaling or a combination of these signalings. The given number may be, for example, 1, 2 or 4. Different values between a channel quality measurement report and an interference measurement report may be configured to the given number.

The UE may report a beam index (beam ID), a CSI measurement resource ID (e.g., an SSBRI or a CRI) or a CSI measurement signal index (e.g., an SSB index or a CSI-RS ID) associated with at least one of the L1-RSRP, the L1-RSRQ, the L1-SINR and the channel quality measurement result whose given number is the largest.

The UE may report a beam index (beam ID), a CSI measurement resource ID (e.g., the SSBRI or the CRI) or the CSI measurement signal index (e.g., an SSB index or a CSI-RS ID) associated with at least one of interference measurement results whose given number is the smallest.

A PUCCH or PUSCH resource may be associated with the beam index, the CSI measurement resource ID or the CSI measurement signal index. The UE may not explicitly report information related to the beam index, and report the information by using a specific PUCCH/PUSCH resource to implicitly notify the base station of the beam index.

For example, X (e.g., eight) PUCCH/PUSCH resources associated with a beam/resource/ID for CSI measurement may be configured to the UE by a higher layer signaling. The UE may transmit a CSI reporting by using x (e.g., two) resources associated with a reporting target beam/resource/ID among the X resources.

In addition, the PUCCH/PUSCH resources configured for the CSI reporting may be associated with at least one of time resources, frequency resources and code resources (e.g., a cyclic shift or an Orthogonal Cover Code (OCC)).

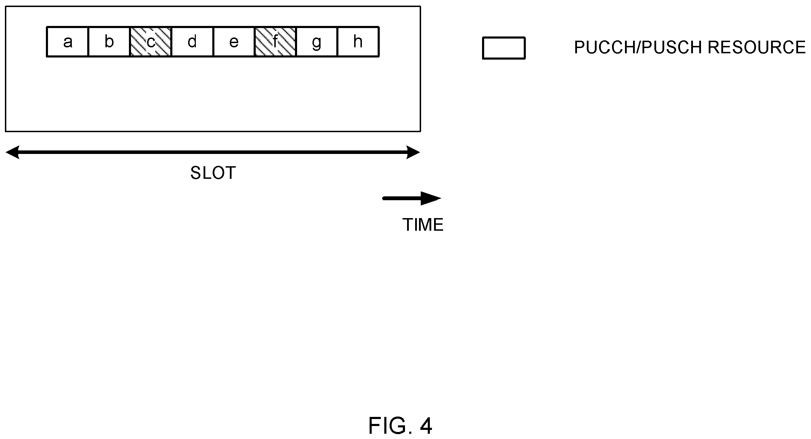

Fig. 4 is a diagram illustrating one example of a PUCCH or PUSCH resource for reporting a CSI measurement result. In this example, the UE configures the eight PUCCH/PUSCH resources for a reporting in association with resources for CSI measurement. For example, the resources may be resources for a Scheduling Request (SR) for a PUCCH format 0.

The configured resources are respectively associated with beams a to h. In Fig. 4, the UE performs transmission using SR resources associated with the beams c and f to report results of the beams c and f.

In addition, the above-described phrase "whose given number is the largest" may be read as that "whose measurement result is a threshold or more", or "whose measurement result is the threshold or more and whose given number is the largest". Furthermore, the above-described phrase "whose given number is the smallest" may be read as that "whose measurement result is less than the threshold" or "whose measurement result is less than the threshold and whose given number is the largest". The threshold described herein may be configured by a higher layer signaling, or may be defined by a specification.

When the UE reports two or more measurement results to the base station, how the base station determines a beam for the UE may depend on an implementation of the base station.

### <Channel to Which Control That does not Configure TCI State is Applied>

Low latency beam selection related control (e.g., control that does not configure a TCI state) according to the present disclosure may be applied only to a PDCCH. This is because the task (latency) described above with regard to beam selection mainly relates to a PDCCH, and beam selection according to Rel-15 NR for other channels is assumed to be functioning. In this case, it is possible to suppress the implementation of the UE from becoming complicated.

Furthermore, control that does not configure the TCI state may be applied to a PDSCH. In this case, the UE may assume that the PDCCH and the PDSCH are transmitted by using the same transmission beam from the base station. The TCI state is not configured to the PDSCH, and therefore it is unnecessary to give notification of the TCI state for the PDSCH using DCI or an MAC CE, so that it is possible to expect reduction of a communication overhead.

Furthermore, control that does not configure the TCI state may be applied to the PUCCH. In this case, the UE may assume that a transmission beam of the PDCCH of the base station and a reception beam of the PUCCH of the base station are the same beam.

Note that the PUCCH equivalent to the TCI state may be expressed as a spatial relation. According to Rel-15 NR, spatial relation information between a given RS and the PUCCH can be included in PUCCH configuration information (PUCCH-Config information element) of RRC. The given RS is at least one of an SSB, a CSI-RS and a Sounding Reference Signal (SRS).

When the spatial relation information related to the SSB or the CSI-RS, and the PUCCH is configured, the UE may transmit the PUCCH by using the same spatial domain filter as a spatial domain filter for reception of the SSB or the CSI-RS. That is, in this case, the UE may assume that a UE reception beam of the SSB or the CSI-RS and the UE transmission beam of the PUCCH are the same.

When the spatial relation information related to the SRS and the PUCCH is configured, the UE may transmit the PUCCH by using the same spatial domain filter as a spatial domain filter for transmission of the SRS. That is, in this case, the UE may assume that a UE transmission beam of the SRS and the UE transmission beam of the PUCCH are the same.

In addition, the spatial domain filter for transmission from the base station, a downlink spatial domain transmission filter and a transmission beam of the base station may be interchangeably read. The spatial domain filter for reception at the base station, an uplink spatial domain reception filter and a reception beam of the base station may be interchangeably read.

Furthermore, the spatial domain filter for transmission from the UE, an uplink spatial domain transmission filter and a transmission beam of the UE may be interchangeably read. The spatial domain filter for reception at the UE, a downlink spatial domain reception filter and a reception beam of the UE may be interchangeably read.

When two or more pieces of the spatial relation information related to the PUCCH are configured, control is performed to activate one PUCCH spatial relation for one PUCCH resource at a certain time by using a PUCCH spatial relation activation/deactivation MAC CE.

The MAC CE may include information such as an application target serving cell ID, BWP ID and PUCCH resource ID.

The UE may apply a configuration matching a spatial domain filter based on the above MAC CE for PUCCH transmission 3 milliseconds after a slot in which HARQ-ACK for the PDSCH that has provided the above MAC CE is transmitted.

The spatial relation is not configured to the PUCCH and therefore it is not necessary to give notification (activation) of the spatial relation for the PUCCH using an MAC CE, so that it is possible to expect reduction of a communication overhead.

A specific example will be described below.

### [Control That Does Not Configure TCI State to PDSCH]

When low latency beam selection is configured by a higher layer signaling, the UE may assume that a PDCCH and a PDSCH are transmitted from the base station by using the same transmission beam.

When a resource is semi-statically allocated to the PDSCH (in a case of, for example, a Semi-Persistent Scheduling (SPS) PDSCH), the UE may assume that a base station transmission beam of the PDSCH and a base station transmission beam of the latest PDCCH (CORESET) are the same.

When a resource is dynamically allocated to the PDSCH, the UE may assume that the base station transmission beam of the PDSCH and a base station transmission beam of a PDCCH (CORESET) for scheduling the PDSCH may be the same.

When low latency beam selection is configured by a higher layer signaling, the UE may assume that the same UE reception beam is used to receive the PDCCH and the PDSCH.

When a resource is semi-statically allocated to the PDSCH, the UE may receive the PDSCH by using a UE reception beam for the latest PDCCH (CORESET).

When a resource is dynamically allocated to the PDSCH, the UE may receive the PDSCH by using a UE reception beam for a PDCCH (CORESET) for scheduling the PDSCH.

When low latency beam selection is configured, the UE may assume that a TCI field included in DCI is 0 bit. When, for example, a higher layer parameter (tci-PresentInDCI) that indicates that the TCI field is included in the DCI is not enabled, or the higher layer parameter that indicates low latency beam selection is enabled, a TCI field of a DCI format 1_1 may be 0 bit.

Even when 9 or more TCI states are configured by the higher layer signaling, and when low latency beam selection is configured, the UE may assume that there is no notification of a TCI state activation/deactivation for a UE-specific PDSCH MAC CE (an MAC CE for beam selection of the PDSCH) (the UE may not expect reception of the MAC CE).

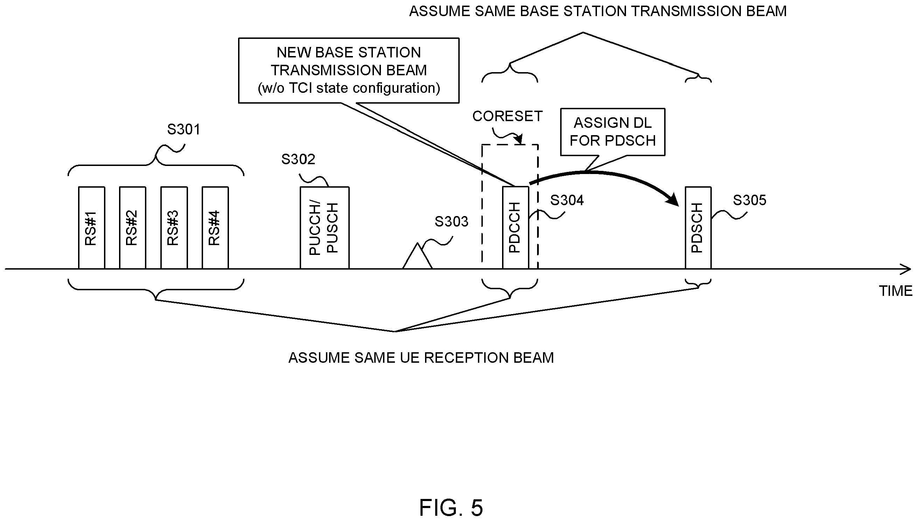

Fig. 5 is a diagram illustrating one example of PDSCH beam management in a case where low latency beam selection is configured. Steps S301 to S304 may be the same as those in the example in Fig. 3, and therefore overlapping description thereof will be omitted. This example assumes that the UE has detected DCI for scheduling a PDSCH in a PDCCH in step S304.

The UE performs reception processing on the PDSCH based on the DCI (step S305). The UE may assume that a base station transmission beam of the PDSCH in step S305 and a base station transmission beam of the PDCCH in step S304 are the same.

Furthermore, the UE may assume that a UE reception beam of the PDSCH in step S305 and a UE reception beam of the PDCCH in step S304 are the same.

Furthermore, when the TCI state is not configured to the PDCCH, the UE may assume that the UE reception beam of the PDSCH in step S305, the UE reception beam of the PDCCH in step S304, and a UE reception beam (the UE reception beam used in step S301) corresponding to the latest beam measurement result reported in step S302 are the same.

### [Control That Does Not Configure TCI State to PUCCH]

When low latency beam selection is configured by a higher layer signaling, the UE may assume that the base station uses the same beam (same transmission/reception beam) for transmission and reception of a PDCCH, a PDSCH and a PUCCH.

When a resource is semi-statically allocated to the PUCCH (in a case of, for example, a P-CSI reporting or an SP-CSI reporting), the UE may assume that a base station beam (reception beam) of the PUCCH and a base station beam (transmission beam) of the latest PDCCH or PDSCH are the same.

When the PUCCH is based on dynamic scheduling (when, for example, HARQ-ACK for the PDSCH scheduled by a DL assignment is transmitted on the PUCCH), the UE may assume that a base station beam (reception beam) of the PUCCH and a base station beam (transmission beam) of at least one of the PDSCH associated with the PUCCH and the PDCCH that has scheduled the PDSCH are the same.

When low latency beam selection is configured by a higher layer signaling, the UE may assume that the reception beam of the PDCCH and the transmission beam of the PUCCH are the same.

When a resource is semi-statically allocated to the PUCCH, the UE may assume that a UE transmission beam of the PUCCH and a UE reception beam of the latest PDCCH or PDSCH are the same.

When the PUCCH is based on dynamic scheduling, the UE may assume that the UE transmission beam of the PUCCH and a UE reception beam of at least one of a PDSCH associated with the PUCCH and the PDCCH that has scheduled the PDSCH are the same.

When low latency beam selection is configured, the UE may assume that there is no notification of a PUCCH spatial relation activation/deactivation MAC CE (the UE may not expect reception of the MAC CE).

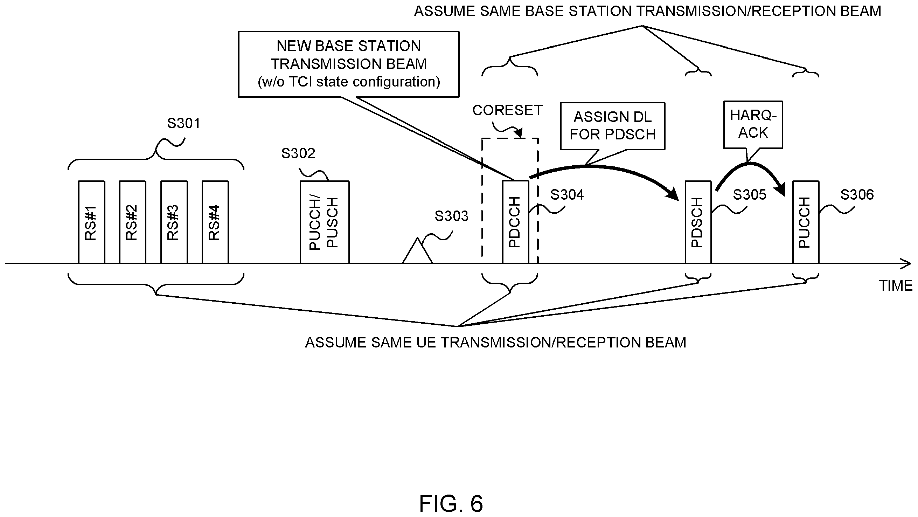

Fig. 6 is a diagram illustrating one example of PUCCH beam management in a case where low latency beam selection is configured. Steps S301 to S305 may be the same as those in the example in Fig. 5, and therefore overlapping description thereof will be omitted.

The UE transmits HARQ-ACK for the PDSCH received in step S305 (step S306). The UE may assume that a base station reception beam of a PUCCH in step S306, a base station transmission beam of the PDSCH in step S305 and a base station transmission beam of the PDCCH in step S304 are the same.

Furthermore, the UE may assume that a UE transmission beam of the PUCCH in step S306, a UE reception beam of the PDSCH in step S305 and a UE reception beam of the PDCCH in step S304 are the same.

Furthermore, when the TCI state is not configured to the PDCCH, the UE may assume that the UE transmission beam of the PUCCH in step S306, the UE reception beam of the PDSCH in step S305, the UE reception beam of the PDCCH in step S304 and a UE reception beam (the UE reception beam used in step S301) corresponding to the latest beam measurement result reported in step S302 are the same.

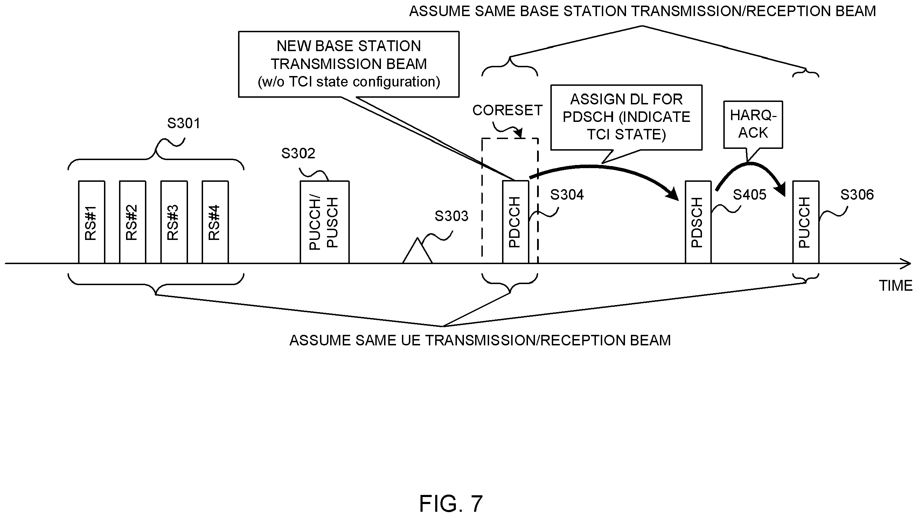

Fig. 7 is a diagram illustrating another example of PUCCH beam management in a case where low latency beam selection is configured. Steps S301 to S303 and S306 may be the same as those in the example in Fig. 6, and therefore overlapping description thereof will be omitted. This example assumes that the UE has detected DCI for scheduling the PDSCH in the PDCCH in step S304. In this regard, unlike the example in Fig. 6, the DCI includes a field that indicates the TCI state for the PDSCH.

The UE performs reception processing on the PDSCH based on the DCI (step S405). The UE may not assume or may assume that a base station transmission beam of the PDSCH in step S405 and the base station transmission beam of the PDCCH in step S304 are the same (Fig. 7 illustrates an example where the UE does not make this assumption).

The UE may assume that the base station reception beam of the PUCCH in step S306 and the base station transmission beam of the PDCCH in step S304 are the same.

Furthermore, the UE may assume that the UE reception beam of the PUCCH in step S306 and the UE reception beam of the PDCCH in step S304 are the same.

Furthermore, when the TCI state is not configured to the PDCCH, the UE may assume that the UE transmission beam of the PUCCH in step S306, the UE reception beam of the PDCCH in step S304, and the UE reception beam (the UE reception beam used in step S301) corresponding to the latest beam measurement result reported in step S302 are the same.

According to the above-described one embodiment, it is possible to more flexibly configure the TCI state for the PDCCH.

### <Modified Example>

### [Modified Example of PDCCH Reception Processing]

In addition, the "reported latest beam measurement result" in the assumption described in relation to the above reception processing of the PDCCH may be limited to a CSI reporting of a specific type. The CSI reporting of the specific type may be one or a combination of, for example, a Periodic CSI (P-CSI) reporting, an Aperiodic CSI (A-CSI) reporting, and a Semi-Permanent (semi-continuous or Semi-Persistent) CSI (SP-CSI) reporting.

In this case, by performing control to cause the UE to perform the CSI reporting of the specific type, the base station can change the assumption of the UE regarding a reception beam (TCI state) for the PDCCH.

Furthermore, the "reception beam/base station transmission beam/TCI state for the PDCCH" in the above assumption may be a "reception beam/base station transmission beam/TCI state for the PDCCH at a time T". In this case, the phrase "reported latest" in the above assumption may be read as "the latest ... reported at a time that is T_{offset} or more before the time T". T_{offset} may be defined based on a time taken by the UE or the base station to switch a beam (e.g., the UE reception beam or the base station transmission beam).

In addition, information related to T_{offset} may be notified to the UE by a higher layer signaling, a physical layer signaling or a combination of these signalings.

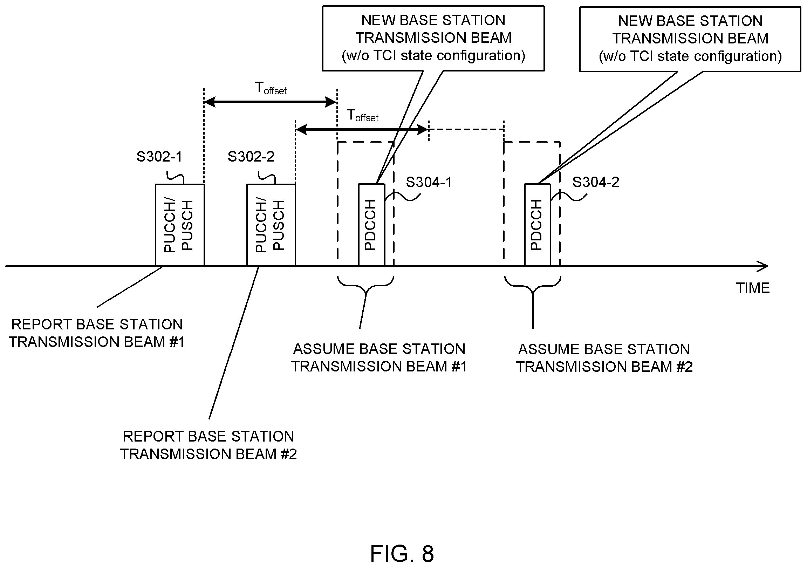

Fig. 8 is a diagram illustrating one example of an assumption of a base station transmission beam of a PDCCH based on T_{offset}. Although steps S302-1 and S302-2 are the same as above-described step S302, a difference is that step S302-1 is a reporting related to a base station transmission beam #1, and step S302-2 is a reporting related to a base station transmission beam #2.

Although steps S304-1 and S304-2 are the same as above-described step S304, a difference is that the UE assumes that the base station transmission beam #1 is applied to the PDCCH in step S304-1, and the UE assumes that the base station transmission beam #2 is applied to the PDCCH in step S304-2.

This is because, although, at a point of time in step S304-1, the reporting in step S304-1 is the latest reporting transmitted at a time that is T_{offset} or more before, the reporting in step S304-2 is transmitted at a time within T_{offset}.

Furthermore, this is because, at the point of time in step S304-2, the reporting in step S304-2 is the latest reporting transmitted at the time that is T_{offset} or more before.

In addition, the assumption of the UE related to the reception beam for the PDCCH may change in a duration of a certain CORESET.

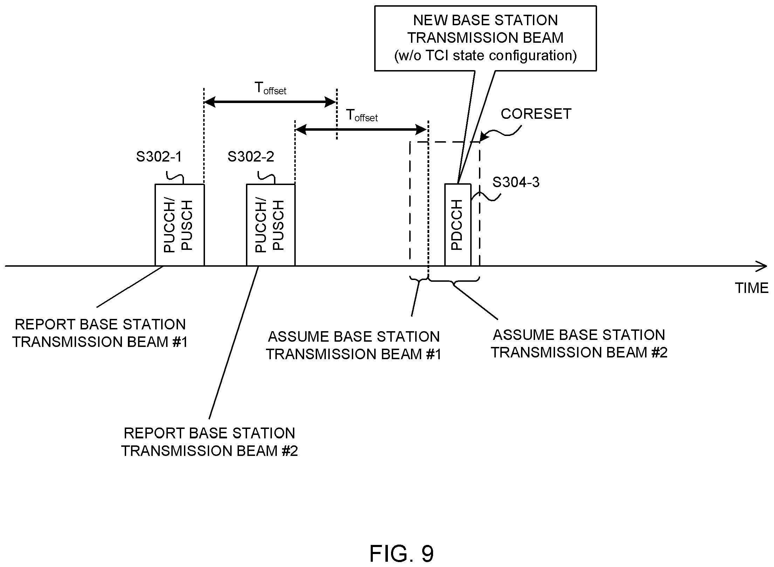

Fig. 9 is a diagram illustrating another example of the assumption of the base station transmission beam of the PDCCH based on T_{offset}. This example describes step S302-3 in which a time position of a CORESET is different from that in Fig. 8.

Furthermore, a difference from above-described step S304 is that the UE assumes that the base station transmission beam #1 is applied to the PDCCHs halfway in the CORESET in step S304-3, and the UE assumes that the base station transmission beam #2 is applied to subsequent PDCCHs.

This is because, although, at a point of time in the middle of the above CORESET, a reporting in step S304-1 is the latest reporting transmitted at the time that is T_{offset} or more before, the reporting in step S304-2 is transmitted at the time within T_{offset}.

Furthermore, this is because, at or after the point of time in the middle of the above CORESET, the reporting in step S304-2 is the latest reporting transmitted at the time that is T_{offset} or more before.

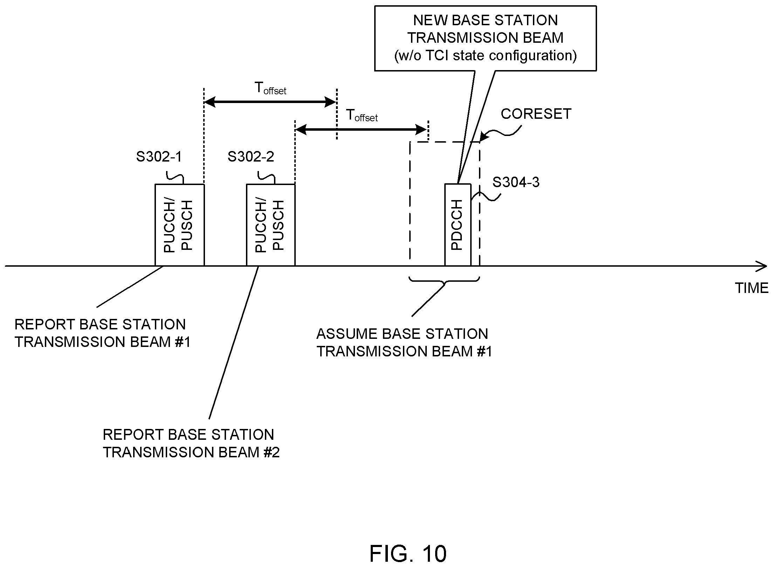

Fig. 10 is a diagram illustrating still another example of the assumption of the base station transmission beam of the PDCCH based on T_{offset}. This example describes the same example as that in Fig. 9.

Fig. 10 differs from Fig. 9 in that the UE does not change the assumption of the base station transmission beam in the CORESET in step S304-3 halfway. The UE may assume that the base station transmission beam to be applied to the PDCCH in the CORESET is the base station transmission beam #1 corresponding to the reporting in step S304-1 that is the latest reporting transmitted at the time that is T_{offset} or more before a point of time of a start position (e.g., a start symbol or a start slot) of the CORESET.

Thus, the UE may assume that a base station transmission beam/UE reception beam of (a PDCCH included in) a CORESET that starts at or after T_{offset} from a reporting of a beam measurement result, and a base station transmission beam/UE reception beam corresponding to the beam measurement result are the same. In this case, the base station transmission beam or the UE reception beam is not switched in the CORESET, so that it is possible to prevent a time to switch the transmission/reception beam (a time during which transmission and reception are impossible) from being generated in the CORESET.

### [Other T_{offset}]

When low latency beam selection is configured by a higher layer signaling, the UE may assume that a base station transmission beam of a PDSCH at the time T is the same as the (latest) base station transmission beam of a PDCCH at a time that is T_{offset2} or more before the time T.

When low latency beam selection is configured by the higher layer signaling, the UE may assume that a UE reception beam of the PDSCH at the time T is the same as the (latest) UE reception beam of the PDCCH at a time that is T_{offset2} or more before the time T.

When low latency beam selection is configured by the higher layer signaling, the UE may assume that a base station reception beam of the PUCCH at the time T is the same as at least one of the (latest) base station transmission beam of a PDSCH and base station transmission beam of a PDCCH at a time that is T_{offset3} or more before the time T.

When low latency beam selection is configured by the higher layer signaling, a UE transmission beam of the PUCCH at the time T is the same as at least one of the (latest) UE reception beam of a PDSCH and UE reception beam of a PDCCH at the time that is T_{offset3} or more before the time T.

T_{offset2} and T_{offset3} may be defined based on a time taken by the UE or the base station to switch a beam (e.g., the UE transmission beam or the base station reception beam). In addition, information related to T_{offset2} and T_{offset3} may be notified to the UE by using a higher layer signaling, a physical layer signaling or a combination of these signalings.

In addition, "assume" in the present disclosure may mean to perform reception processing, transmission processing and measurement processing while making an assumption.

### (Radio Communication System)

The configuration of the radio communication system according to one embodiment of the present disclosure will be described below. This radio communication system uses one or a combination of the radio communication method according to each of the above embodiment of the present disclosure to perform communication.

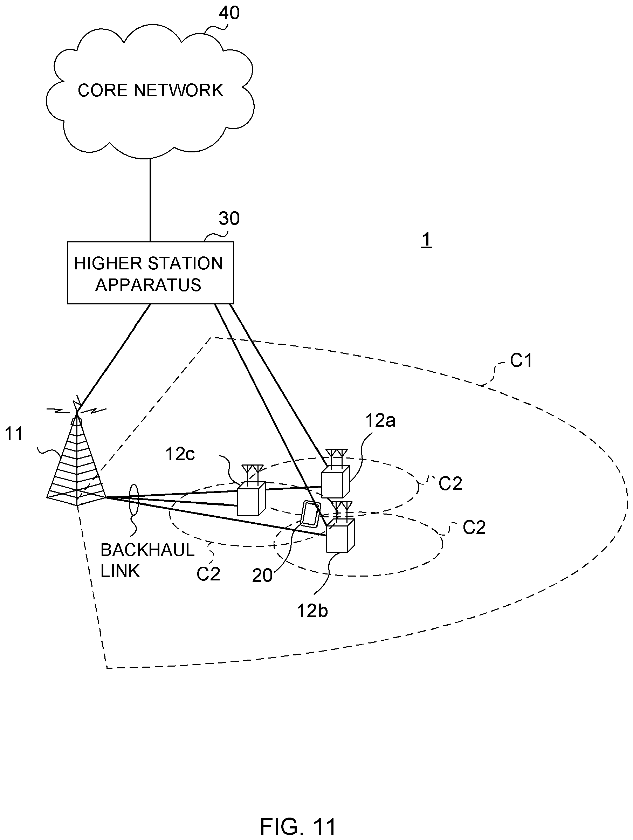

Fig. 11 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a base station 11 that forms a macro cell C1 of a relatively wide coverage, and base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 11.

The user terminal 20 can connect with both of the base station 11 and the base stations 12. The user terminal 20 is assumed to concurrently use the macro cell C1 and the small cells C2 by using CA or DC. Furthermore, the user terminal 20 can apply CA or DC by using a plurality of cells (CCs).

The user terminal 20 and the base station 11 can communicate by using a carrier (also referred to as a legacy carrier) of a narrow bandwidth in a relatively low frequency band (e.g., 2 GHz). On the other hand, the user terminal 20 and each base station 12 may use a carrier of a wide bandwidth in a relatively high frequency band (e.g., 3.5 GHz or 5 GHz) or may use the same carrier as that used between the user terminal 20 and the base station 11. In this regard, a configuration of the frequency band used by each base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain. For example, a case where subcarrier spacings of constituent OFDM symbols are different and/or a case where the numbers of OFDM symbols are different on a certain physical channel may be read as that numerologies are different.

The base station 11 and each base station 12 (or the two base stations 12) may be connected by way of wired connection (e.g., optical fibers compliant with a Common Public Radio Interface (CPRI) or an X2 interface) or radio connection.

The base station 11 and each base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each base station 12 may be connected with the higher station apparatus 30 via the base station 11.

In this regard, the base station 11 is a base station that has a relatively wide coverage, and may be referred to as a macro base station, an aggregate node, an eNodeB (eNB) or a transmission/reception point. Furthermore, each base station 12 is a base station that has a local coverage, and may be referred to as a small base station, a micro base station, a pico base station, a femto base station, a Home eNodeB (HeNB), a Remote Radio Head (RRH) or a transmission/reception point. The base stations 11 and 12 will be collectively referred to as a base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or consecutive resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### (Base Station)

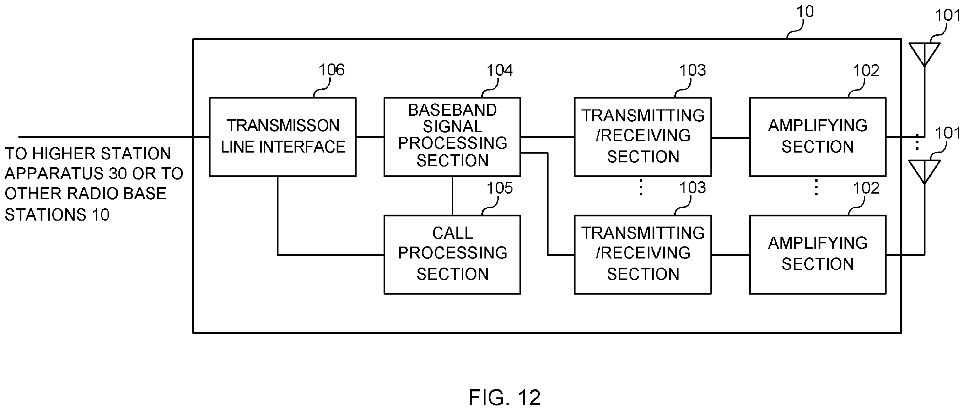

Fig. 12 is a diagram illustrating one example of an overall configuration of the base station according to the one embodiment. The base station 10 includes pluralities of transmission/reception antennas 101, amplifying sections 102 and transmitting/receiving sections 103, a baseband signal processing section 104, a call processing section 105 and a transmission line interface 106. In this regard, the base station 10 only needs to be configured to include one or more of each of the transmission/reception antennas 101, the amplifying sections 102 and the transmitting/receiving sections 103.

User data transmitted from the base station 10 to the user terminal 20 on downlink is input from the higher station apparatus 30 to the baseband signal processing section 104 via the transmission line interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmitting/receiving section or may be composed of transmission sections and reception sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the transmission line interface 106. The call processing section 105 performs call processing (such as configuration and release) of a communication channel, state management of the base station 10 and radio resource management.

The transmission line interface 106 transmits and receives signals to and from the higher station apparatus 30 via a given interface. Furthermore, the transmission line interface 106 may transmit and receive (backhaul signaling) signals to and from the another base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 101 can be composed of an array antenna, for example.

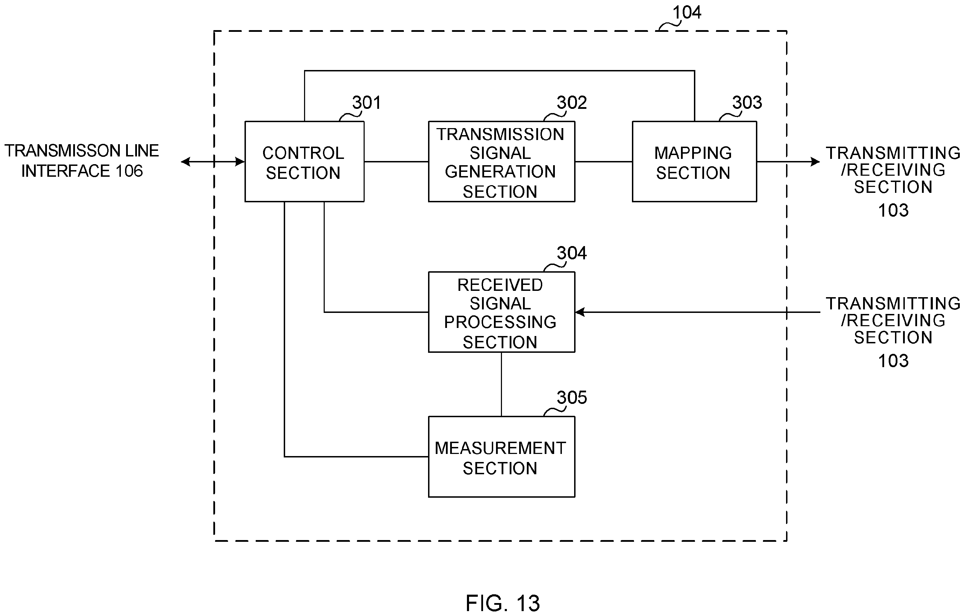

Fig. 13 is a diagram illustrating one example of a function configuration of the base station according to the one embodiment. In addition, this example mainly illustrates function blocks of characteristic portions according to the present embodiment, and may assume that the base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the base station 10, and part or all of the components may not be included in the baseband signal processing section 104.

The control section (scheduler) 301 controls the entire base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

The control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

The control section 301 may perform control for forming a transmission beam and/or a reception beam by using digital BF (e.g., precoding) in the baseband signal processing section 104 and/or analog BF (e.g., phase rotation) in each transmitting/receiving section 103. The control section 301 may perform control for forming a beam based on downlink channel information or uplink channel information. These pieces of channel information may be obtained from the received signal processing section 304 and/or the measurement section 305.

The transmission signal generating section 302 generates a downlink signal (such as a downlink control signal, a downlink data signal or a downlink reference signal) based on an indication from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for giving notification of downlink data allocation information, and/or a UL grant for giving notification of uplink data allocation information based on the indication from the control section 301. The DL assignment and the LTL grant are both DCI, and conform to a DCI format. Furthermore, the transmission signal generating section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generating section 302, on given radio resources based on the indication from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

In addition, each transmitting/receiving section 103 may transmit Downlink Control Information (DCI) (such as a DL assignment) for scheduling a downlink shared channel (e.g., PDSCH) by using a PDCCH. Each transmitting/receiving section 103 may transmit configuration information of low latency beam selection to the user terminal 20.

Each transmitting/receiving section 103 may receive from the user terminal 20 a measurement result of a reference signal (a CSI measurement reference signal such as an SSB or a CSI-RS) measured by applying a downlink spatial domain reception filter.

The control section 301 may perform control for using the same spatial domain filter for transmission of the PDCCH and transmission and reception of a specific channel for the user terminal 20 to which low latency beam selection has been configured by a higher layer signaling.

The control section 301 may perform control for using the same downlink spatial domain transmission filter for transmission of the PDCCH and transmission of the PDSCH.

The control section 301 may perform control for using the same spatial domain transmission filter for transmission of the PDCCH and reception of a PUCCH.

Furthermore, the control section 301 may perform control for transmitting the PDCCH by using the same downlink spatial domain transmission filter as a downlink spatial domain transmission filter matching the above received latest measurement result (such as a CSI measurement result) for the user terminal 20 to which low latency beam selection has been configured by the higher layer signaling.

The control section 301 may perform control for transmitting the PDSCH by using the same downlink spatial domain transmission filter as the downlink spatial domain transmission filter used for transmission of the PDCCH.

The control section 301 may perform control for receiving the PUCCH by using the same uplink spatial domain reception filter as the downlink spatial domain transmission filter used for transmission of the PDCCH.

### (User Terminal)

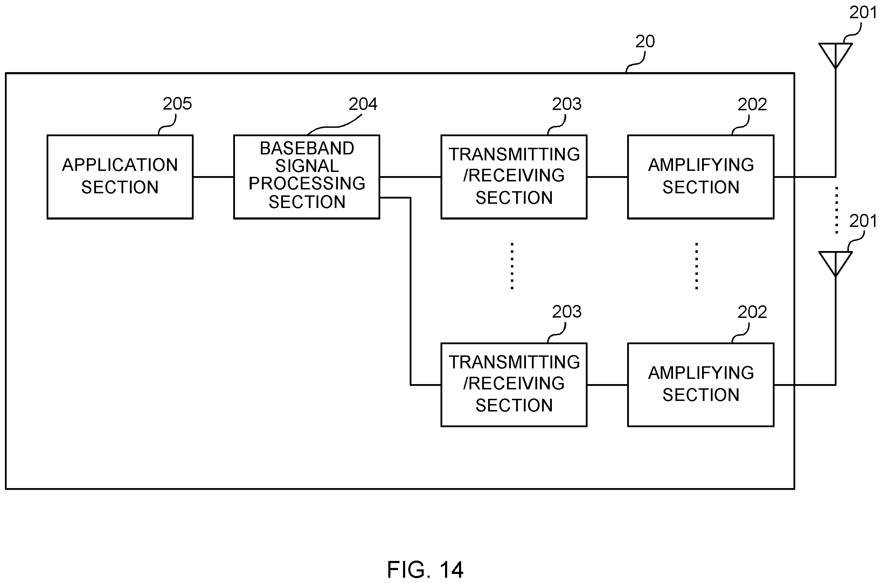

Fig. 14 is a diagram illustrating one example of an overall configuration of the user terminal according to the one embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmitting/receiving section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 201 can be composed of an array antenna, for example.

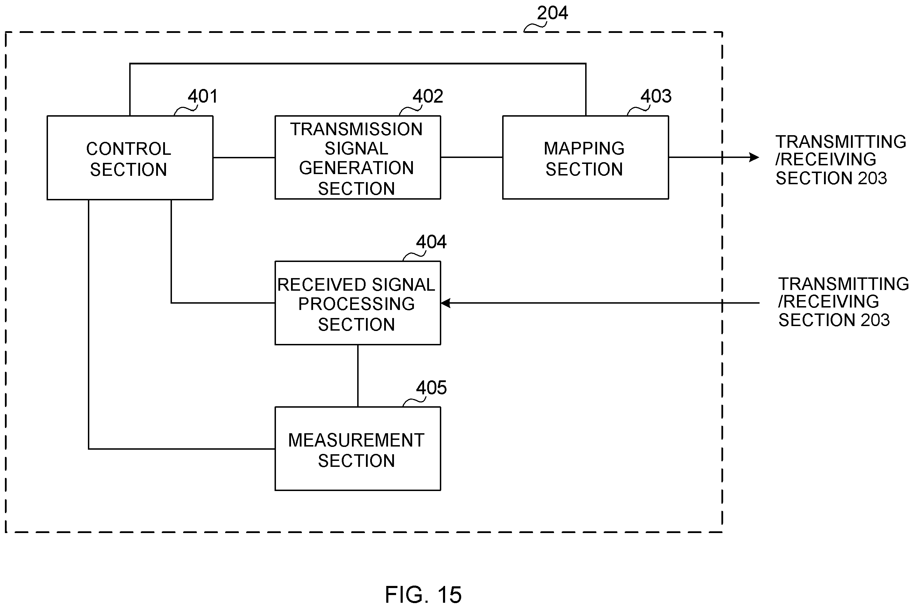

Fig. 15 is a diagram illustrating one example of a function configuration of the user terminal according to the one embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the base station 10. The control section 401 controls generation of an uplink control signal and/or an uplink data signal based on a result obtained by deciding whether or not it is necessary to perform retransmission control on the downlink control signal and/or the downlink data signal.

The control section 401 may perform control for forming a transmission beam and/or a reception beam by using digital BF (e.g., precoding) in the baseband signal processing section 204 and/or analog BF (e.g., phase rotation) in each transmitting/receiving section 203. The control section 401 may perform control for forming a beam based on downlink channel information or uplink channel information. These pieces of channel information may be obtained from the received signal processing section 404 and/or the measurement section 405.

Furthermore, when obtaining from the received signal processing section 404 various pieces of information notified from the base station 10, the control section 401 may update parameters used for control based on the various pieces of information.

The transmission signal generating section 402 generates an uplink signal (such as an uplink control signal, an uplink data signal or an uplink reference signal) based on an indication from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on the indication from the control section 401. Furthermore, the transmission signal generating section 402 generates an uplink data signal based on the indication from the control section 401. When, for example, the downlink control signal notified from the base station 10 includes a UL grant, the transmission signal generating section 402 is instructed by the control section 401 to generate an uplink data signal.

The mapping section 403 maps the uplink signal generated by the transmission signal generating section 402, on radio resources based on the indication from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the base station 10. The received signal processing section 404 can be composed of a signal processor, a signal processing circuit or a signal processing apparatus described based on the common knowledge in the technical field according to the present disclosure. Furthermore, the received signal processing section 404 can compose the receiving section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. For example, the measurement section 405 may perform intra-frequency measurement and/or inter-frequency measurement on one or both of a first carrier and a second carrier. When the first carrier includes a serving cell, the measurement section 405 may perform inter-frequency measurement in the second carrier based on a measurement indication obtained from the received signal processing section 404. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

In addition, each transmitting/receiving section 203 may receive the PDCCH including the Downlink Control Information (DCI) (such as a DL assignment) for scheduling the downlink shared channel (e.g., PDSCH). Each transmitting/receiving section 203 may receive the configuration information of low latency beam selection from the base station 10.

Each transmitting/receiving section 203 may transmit to the base station 10 the measurement result of the reference signal (the CSI measurement reference signal such as the SSB or the CSI-RS) measured by applying the downlink spatial domain reception filter.

When low latency beam selection is configured by the higher layer signaling, the control section 401 may assume that the same spatial domain filter is used for transmission of the PDCCH from the base station 10 and transmission and reception (at least one of transmission and reception) of a specific channel from and at the base station 10.

The control section 401 may assume that the same downlink spatial domain transmission filter is used for transmission of the PDCCH from the base station 10 and transmission of the PDSCH from the base station 10.

The control section 401 may assume that a downlink spatial domain transmission filter used for transmission of the PDCCH from the base station 10 and an uplink spatial domain reception filter used for reception of the PUCCH at the base station 10 are the same.

Furthermore, when low latency beam selection is configured by the higher layer signaling, the control section 401 may assume that a downlink spatial domain reception filter of the user terminal 20 used for reception of the PDCCH is the same as a downlink spatial domain reception filter of the user terminal 20 matching the above transmitted latest measurement result (such as the CSI measurement result).

The control section 401 may assume that the downlink spatial domain reception filter of the user terminal 20 used for reception of the PDSCH is the same as a downlink spatial domain reception filter of the user terminal 20 used for reception of the PDCCH.

The control section 401 may assume that an uplink spatial domain transmission filter of the user terminal 20 used for transmission of the PUCCH is the same as a downlink spatial domain reception filter of the user terminal 20 used for reception of the PDCCH.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection).

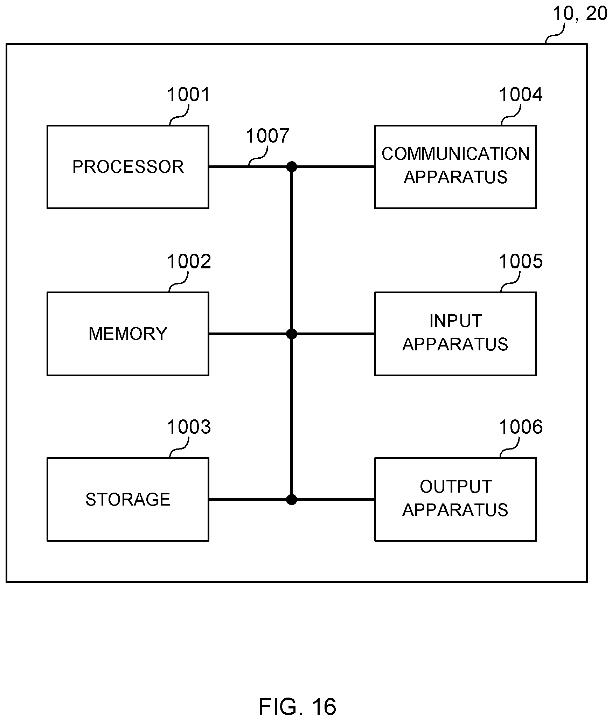

For example, the base station and the user terminal according to the one embodiment of the present disclosure may function as computers that perform processing of the radio communication method according to the present disclosure. Fig. 16 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the base station 10 and the user terminal 20 may be configured to include one or a plurality of apparatuses illustrated in Fig. 16 or may be configured without including part of the apparatuses.

For example, Fig. 16 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception antennas 101 (201), amplifying sections 102 (202), transmitting/receiving sections 103 (203) and transmission line interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a Transmission Time Interval (TTI), a plurality of consecutive subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of consecutive subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of consecutive common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "transmission power", "phase rotation", an "antenna port", an "antenna port group", a "layer", "the number of layers", a "rank", a "beam", a "beam width", a "beam angle", an "antenna", an "antenna element" and a panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus or a reception apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up (e.g., looking up in a table, a database or another data structure) and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure.

## Claims

1. A terminal (20) comprising:
a receiving section (203) adapted to receive a Physical Downlink Control Channel, PDCCH; and
a control section (401) adapted to, when low latency beam selection is configured by higher layer signaling, assume that a same spatial domain filter is used for transmission of the PDCCH, transmission of a Physical Downlink Shared Channel, PDSCH, and reception of a Physical Uplink Control Channel, PUCCH,
wherein the control section (401) is adapted to assume, when low latency beam selection is configured by higher layer signaling, that a downlink spatial domain reception filter used for reception of the PDCCH in a control resource set, CORESET, is same as a downlink spatial domain reception filter corresponding to a transmitted latest measurement result in order to perform PDCCH reception processing, and
wherein the low latency beam selection is a beam selection in which the terminal (20) is not notified of a new transmission configuration indicator, TCI, state for the PDCCH.

2. A base station (10) comprising:
a transmission section (103) adapted to transmit a Physical Downlink Control Channel, PDCCH; and
a control section (301) adapted to perform control for using a same spatial domain filter for transmission of the PDCCH, transmission of a Physical Downlink Shared Channel, PDSCH, and reception of a Physical Uplink Control Channel, PUCCH, for a terminal (20) to which low latency beam selection has been configured by higher layer signaling,
wherein the control section (301) is adapted to perform a control, for a terminal (20) in which low latency beam selection is configured by higher layer signaling, to transmit the PDCCH in a control resource set, CORESET, by using a same downlink spatial domain transmission filter as a downlink spatial domain transmission filter corresponding to a received latest measurement result for the terminal (20) in which low latency beam selection is configured by higher layer signaling,
wherein the low latency beam selection is a beam selection in which the terminal (20) is not notified of a new transmission configuration indicator, TCI, state for the PDCCH.

3. A radio communication method performed by a terminal comprising:
receiving a physical downlink control channel, PDCCH; and
when low latency beam selection is configured by higher layer signaling, assuming that a same spatial domain filter is used for transmission of the PDCCH, transmission of a Physical Downlink Shared Channel, PDSCH, and reception of a Physical Uplink Control Channel, PUCCH,
when low latency beam selection is configured by higher layer signaling, assuming that a downlink spatial domain reception filter used for reception of the PDCCH in a control resource set, CORESET, is same as a downlink spatial domain reception filter corresponding to a transmitted latest measurement result in order to perform PDCCH reception processing, and
wherein the low latency beam selection is a beam selection in which the terminal (20) is not notified of a new transmission configuration indicator, TCI, state for the PDCCH.

4. A system comprising a terminal (20) according to claim 1, and a base station (10) according to claim 2.

## Patentansprüche

1. Endgerät (20), umfassend:
einen Empfangsabschnitt (203), der so angepasst ist, dass er einen physikalischen Abwärtsverbindungssteuerkanal, PDCCH, empfängt; und
einen Steuerabschnitt (401), der so angepasst ist, dass er, wenn eine Niedriglatenzstrahlenauswahl durch eine Signalisierung auf höherer Ebene konfiguriert ist, annimmt, dass derselbe Raumbereichsfilter für eine Übertragung des PDCCH, eine Übertragung eines physikalischen geteilten Abwärtsverbindungskanals, PDSCH, und den Empfang eines physikalischen Aufwärtsverbindungssteuerkanals, PUCCH, verwendet wird,
wobei der Steuerabschnitt (401) so angepasst ist, dass er, wenn eine Niedriglatenzstrahlenauswahl durch eine Signalisierung auf höherer Ebene konfiguriert ist, annimmt, dass ein Abwärtsverbindungsraumbereichsempfangsfilter, der für den Empfang des PDCCH in einem Steuerressourcensatz, CORESET, verwendet wird, derselbe ist wie ein Abwärtsverbindungsraumbereichsempfangsfilter, der einem übertragenen letzten Messergebnis entspricht, um eine PDCCH-Empfangsverarbeitung durchzuführen, und
wobei die Niedriglatenzstrahlenauswahl eine Strahlenauswahl ist, bei der das Endgerät (20) nicht über einen neuen Übertragungskonfigurationsindikator-, TCI, Zustand für den PDCCH informiert wird.

2. Basisstation (10), umfassend:
einen Übertragungsabschnitt (103), der so angepasst ist, dass er einen physikalischen Abwärtsverbindungssteuerkanal, PDCCH, überträgt; und
einen Steuerabschnitt (301), der so angepasst ist, dass er eine Steuerung zur Verwendung desselben Raumbereichsfilters für die Übertragung des PDCCH, die Übertragung eines physikalischen geteilten Abwärtsverbindungskanals, PDSCH, und den Empfang eines physikalischen Aufwärtsverbindungssteuerkanals, PUCCH, für ein Endgerät (20) durchführt, für das eine Niedriglatenzstrahlenauswahl durch eine Signalisierung auf höherer Ebene konfiguriert worden ist,
wobei der Steuerabschnitt (301) so angepasst ist, dass er für ein Endgerät (20), in dem die Niedriglatenzstrahlenauswahl durch eine Signalisierung auf höherer Ebene konfiguriert ist, eine Steuerung durchführt, um den PDCCH in einem Steuerressourcensatz, CORESET, zu übertragen, indem derselbe Abwärtsverbindungsraumbereichsübertragungsfilter wie ein Abwärtsverbindungsraumbereichsübertragungsfilter verwendet wird, der einem empfangenen letzten Messergebnis für das Endgerät (20) entspricht, in dem eine Niedriglatenzstrahlenauswahl durch eine Signalisierung auf höherer Ebene konfiguriert ist,
wobei die Niedriglatenzstrahlenauswahl eine Strahlenauswahl ist, bei der das Endgerät (20) nicht über einen neuen Übertragungskonfigurationsindikator-, TCI, Zustand für den PDCCH informiert wird.

3. Funkkommunikationsverfahren, das von einem Endgerät durchgeführt wird, umfassend:
Empfangen eines physikalischen Abwärtsverbindungssteuerkanals, PDCCH; und
wenn eine Niedriglatenzstrahlenauswahl durch eine Signalisierung auf höherer Ebene konfiguriert wird, Annehmen, dass für die Übertragung des PDCCH, die Übertragung eines physikalischen geteilten Abwärtsverbindungskanals, PDSCH, und den Empfang eines physikalischen Aufwärtsverbindungssteuerkanals, PUCCH, derselbe Raumbereichsfilter verwendet wird,
wenn eine Niedriglatenzstrahlenauswahl durch eine Signalisierung auf höherer Ebene konfiguriert wird, Annehmen, dass ein für den Empfang des PDCCH in einem Steuerressourcensatz, CORESET, verwendeter Abwärtsverbindungsraumbereichsempfangsfilter derselbe ist wie ein Abwärtsverbindungsraumbereichsempfangsfilter, der einem übertragenen letzten Messergebnis entspricht, um eine PDCCH-Empfangsverarbeitung durchzuführen, und
wobei die Niedriglatenzstrahlenauswahl eine Strahlenauswahl ist, bei der das Endgerät (20) nicht über einen neuen Übertragungskonfigurationsindikator-, TCI, Zustand für den PDCCH informiert wird.

4. System, das ein Endgerät (20) nach Anspruch 1 und eine Basisstation (10) nach Anspruch 2 umfasst.

## Revendications

1. Terminal (20) comprenant :
une section de réception (203) adaptée pour recevoir un canal de commande physique de liaison descendante, PDCCH ; et
une section de commande (401) adaptée pour, lorsqu'une sélection de faisceau à faible latence est configurée par une signalisation de couche supérieure, supposer qu'un même filtre de domaine spatial est utilisé pour une transmission du PDCCH, une transmission d'un canal physique partagé de liaison descendante, PDSCH, et une réception d'un canal de commande physique de liaison ascendante, PUCCH,
dans lequel la section de commande (401) est adaptée pour supposer, lorsqu'une sélection de faisceau à faible latence est configurée par une signalisation de couche supérieure, qu'un filtre de réception de domaine spatial de liaison descendante utilisé pour une réception du PDCCH dans un ensemble de ressources de commande, CORESET, est identique à un filtre de réception de domaine spatial de liaison descendante correspondant à un dernier résultat de mesure transmis afin de réaliser un traitement de réception de PDCCH, et
dans lequel la sélection de faisceau à faible latence est une sélection de faisceau au cours de laquelle le terminal (20) ne reçoit pas une notification d'un nouvel état d'indicateur de configuration de transmission, TCI, pour le PDCCH.

2. Station de base (10) comprenant :
une section de transmission (103) adaptée pour transmettre un canal de commande physique de liaison descendante, PDCCH ; et
une section de commande (301) adaptée pour exécuter une commande pour utiliser un même filtre de domaine spatial pour une transmission du PDCCH, une transmission d'un canal physique partagé de liaison descendante, PDSCH, et une réception d'un canal de commande physique de liaison ascendante, PUCCH, pour un terminal (20) pour lequel une sélection de faisceau à faible latence a été configurée par une signalisation de couche supérieure,
la section de commande (301) étant adaptée pour exécuter une commande, pour un terminal (20) dans lequel une sélection de faisceau à faible latence est configurée par une signalisation de couche supérieure, pour transmettre le PDCCH dans un ensemble de ressources de commande, CORESET, en utilisant un même filtre de transmission de domaine spatial de liaison descendante qu'un filtre de transmission de domaine spatial de liaison descendante correspondant à un dernier résultat de mesure reçu pour le terminal (20) dans lequel une sélection de faisceau à faible latence est configurée par une couche de signalisation supérieure,
dans laquelle la sélection de faisceau à faible latence est une sélection de faisceau au cours de laquelle le terminal (20) n'est pas informé d'un nouvel état d'indicateur de configuration de transmission, TCI, pour le PDCCH.

3. Procédé de communication radio mis en oeuvre par un terminal comprenant :
la réception d'un canal de commande physique de liaison descendante, PDCCH ; et
lorsqu'une sélection de faisceau à faible latence est configurée par une signalisation de couche supérieure, la supposition qu'un même filtre de domaine spatial est utilisé pour une transmission du PDCCH, une transmission d'un canal physique partagé de liaison descendante, PDSCH, et une réception d'un canal de commande physique de liaison ascendante, PUCCH,
lorsqu'une sélection de faisceau à faible latence est configurée par une signalisation de couche supérieure, la supposition qu'un filtre de réception de domaine spatial de liaison descendante utilisé pour une réception du PDCCH dans un ensemble de ressources de commande, CORESET, est identique à un filtre de réception de domaine spatial de liaison descendante correspondant à un dernier résultat de mesure transmis afin de réaliser un traitement de réception de PDCCH, et
dans lequel la sélection de faisceau à faible latence est une sélection de faisceau au cours de laquelle le terminal (20) n'est pas notifié d'un nouvel état d'indicateur de configuration de transmission, TCI, pour le PDCCH.

4. Système comprenant un terminal (20) selon la revendication 1, et une station de base (10) selon la revendication 2.
